# EUROPÄISCHE PATENTSCHRIFT

(11) **EP 0 618 398 B1**
(45) Veröffentlichungstag und Bekanntmachung des Hinweises auf die Patenterteilung: **21.05.1997**
(21) Anmeldenummer: 94105072.6
(22) Anmeldetag: 30.03.1994
(51) Int. Cl.: F16L 55/26

(54) **Vorrichtung zum Bearbeiten der Innenoberfläche einer nichtbegehbaren Rohrleitung**
Device for the treatment of the inner surface of a non-accessible pipeline
Dispositif pour le traitement de la surface intérieure d'une conduite non-accessible

(30) Priorität: 02.04.1993 DE 9305077 U
(43) Veröffentlichungstag der Anmeldung: 05.10.1994
(73) Patentinhaber: SIEMENS AKTIENGESELLSCHAFT, 80333 München (DE)
(72) Erfinder: Dippold, Clemens, Dipl.-Ing., D-96049 Bamberg (DE); Dotzler, Gerhard, D-90431 Nürnberg (DE); Gegner, Konrad, D-90574 Rosstal (DE)

(56) Entgegenhaltungen:
- WO-A-86/03818
- WO-A-88/07645

## Beschreibung

Die Erfindung bezieht sich auf eine Vorrichtung zum Bearbeiten der Innenoberfläche einer nichtbegehbaren Rohrleitung, wie sie beispielsweise aus der europäischen Patentschrift 0 204 694 bekannt ist.

Zum Sanieren von schadhaft gewordenen, nichtbegehbaren Rohrleitungen sind vor dem eigentlichen Verspachteln und Ausbessern der schadhaften Stellen eine Reihe von vorbereitenden mechanischen Bearbeitungsschritten, insbesondere Bohr- und Fräsarbeiten, erforderlich. Aus der europäischen Patentschrift 0 204 694 ist eine Vorrichtung zum Bearbeiten der Innenoberfläche einer nichtbegehbaren Rohrleitung bekannt, bei der die hierzu notwendigen Bearbeitungsvorrichtungen, beispielsweise ein Fräskopf mit einem Schaftfräser als Werkzeug, auf einem in die Rohrleitung einführbaren ferngesteuerten Fahrzeug angeordnet sind. Um den gesamten Innenumfang der Rohrleitung bearbeiten zu können, müssen diese Bearbeitungsvorrichtungen um die Achse der Rohrleitung und somit auch um die Längsachse des relativ zur Rohrleitungsachse ruhenden Fahrzeuges drehbar gelagert sein.

Die zu der Bearbeitungsvorrichtung führenden Leitungen der zum Antrieb der radialen Zustellbewegung des Werkzeugs und dessen beim Bohren oder Fräsen erforderlichen schnellen Rotation erforderlichen Betriebsmedien können sich dann durch die Drehbewegung der gesamten Bearbeitungsvorrichtung verwickeln und zu Betriebsstörungen führen.

In der WO 88/07 645 ist deshalb vorgeschlagen worden, die im drehbaren Bereich der Bearbeitungsvorrichtung erforderlichen Leitungen durch eine im Fahrzeug gelagerte Hohlwelle hindurchzuführen, so daß sich die durch die Drehbewegung der Bearbeitungsvorrichtung ergebende Torsion durch die hinter dem Fahrzeug zum Wartungsschacht führenden Leitung aufgefangen werden kann. Dies führt jedoch dazu, daß die von der Torsion dieser Leitungen ausgeübten Drehmomente unmittelbar auf die Bearbeitungsvorrichtung sowie die in ihrer Nähe untergebrachten Hilfsvorrichtungen, wie beispielsweise eine Fernsehkamera oder eine Spritzdüse für eine Kühlflüssigkeit zum Kühlen des Werkzeugs, ausgeübt werden. Außerdem können durch diese Maßnahme ein Verwickeln dieser Leitungen und sich daraus ergebende Betriebsstörungen nicht mit Sicherheit ausgeschlossen werden.

Der Erfindung liegt nun die Aufgabe zugrunde, eine Vorrichtung zum Bearbeiten der Innenoberfläche einer nichtbegehbaren Rohrleitung anzugeben, bei der solche vorstehend genannten Betriebsstörungen praktisch vermieden sind.

Die genannte Aufgabe wird gemäß der Erfindung gelöst mit den Merkmalen des Schutzanspruches 1. Da zur Übertragung der zur Versorgung der Bearbeitungseinrichtung erforderlichen Betriebsmedien innerhalb einer Gehäuseschale des Fahrzeugs angeordnete Kanäle vorgesehen sind, die über Drehdurchführungen an drehfest mit der Bearbeitungsvorrichtung verbundene Leitungen angeschlossen sind, ist eine torsionsfreie Verbindung der innerhalb des Fahrzeugs verlaufenden Leitungen mit denen gemeinsam mit der Bearbeitungsvorrichtung drehbaren Leitungen gewährleistet und ein Verwickeln der zur Bearbeitungsvorrichtung führenden Leitungen ausgeschlossen.

Weitere vorteilhafte Ausgestaltungen der Erfindung ergeben sich gemäß der Unteransprüche.

Zur weiteren Erläuterung der Erfindung wird auf die Zeichnung verwiesen, in deren
Figur 1 eine gattungsgemäße Vorrichtung in einer Seitenansicht schematisch veranschaulicht ist.
Figur 2 zeigt in einem Schnitt schematisch die wesentlichen konstruktiven Elemente eines Fahrzeugs gemäß der Erfindung und in
Figuren 3 und 4 ist eine am Fahrzeug drehbar angeordnete Halteeinrichtung für eine Bearbeitungsvorrichtung in einem Schnitt bzw. einer Draufsicht veranschaulicht.

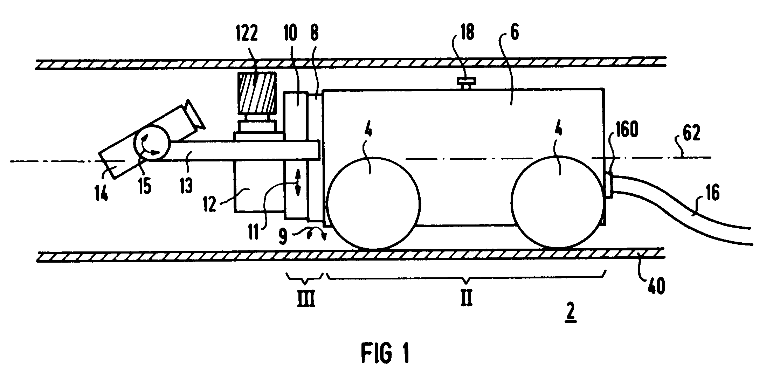

Gemäß **Figur 1** enthält eine Vorrichtung 2 zum Bearbeiten der Innenoberfläche einer nichtbegehbaren Rohrleitung 40 ein auf Rädern 4 fahrbares Fahrzeug 6, das an einer seiner Stirnseiten mit einem Drehteller 8 versehen ist, der um eine zur Längsachse des Fahrzeugs 6 parallele Drehachse 62 drehbar gelagert ist. Diese Drehbarkeit wird in der Figur durch den gebogenen Doppelpfeil 9 veranschaulicht.

Am Drehteller 8 ist eine Halteeinrichtung 10 für eine Bearbeitungsvorrichtung 12, beispielsweise einen Fräskopf mit einem Fräswerkzeug 122 befestigt, die an einem in der Halteeinrichtung 10 in Richtung des Doppelpfeils 11 verschiebbaren und in der Figur nicht sichtbaren Radialschlitten angeordnet ist.

Am Drehteller 8 ist außerdem an einem Ausleger 13 eine Fernsehkamera 14 mit Beleuchtung angeordnet, die um eine quer zur Drehsachse 62 orientierte Achse in Richtung der Doppelpfeile 15 geschwenkt werden kann.

Die der Bearbeitungsvorrichtung 12 gegenüberliegende Stirnseite des Fahrzeugs 6 ist mit einem Anschluß 160 für Versorgungsleitungen 16 versehen, mit der die zum Betrieb der gesamten Vorrichtung 2 erforderlichen Betriebsmedien, beispielsweise Hydrauliköle oder Druckluft, sowie elektrischen Kabel herangeführt werden.

Auf der den Rädern 4 gegenüberliegenden Seite des Fahrzeugs 6 ist außerdem ein radial verstellbarer Spannkolben 18 angeordnet, mit dem das Fahrzeug 6 in der Bearbeitungsposition innerhalb der Rohrleitung 40 fixiert werden kann.

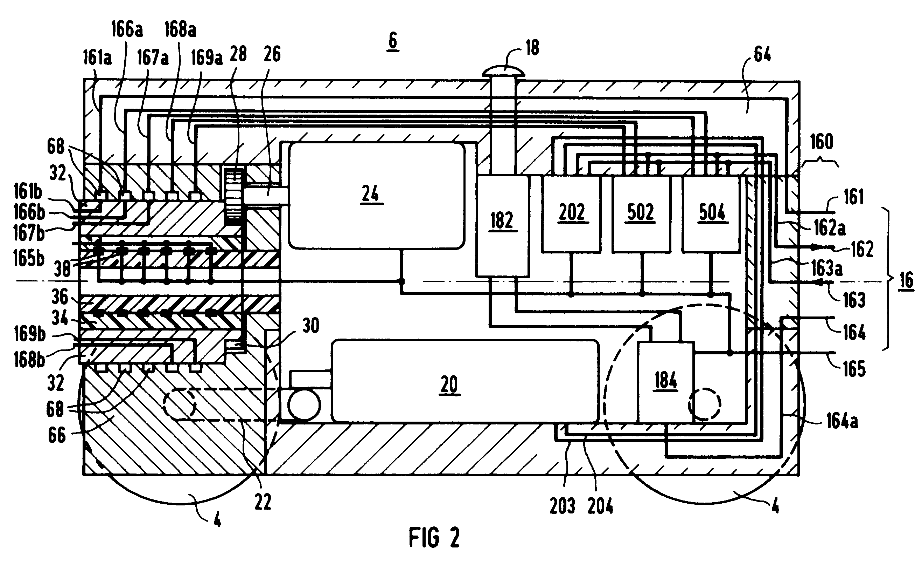

In der Prinzipdarstellung gemäß **Figur 2** ist das Fahrzeug 6 schematisch in einem Schnitt gemeinsam mit den innerhalb des Fahrzeugs angeordneten und zu seinem Betrieb sowie den zum Betrieb der Bearbeitungsvorrichtung erforderlichen Komponenten veranschaulicht. Innerhalb einer vollständig gekapselten Gehäuseschale 64 ist ein Hydraulikmotor 20 angeordnet, dessen Welle über Zahnräder eine zu den gestrichelt dargestellten vorderen Rädern 4 führenden Kette 22 antreibt.

Durch die Verwendung einer Kette 22 kann mit geringem Aufwand und ohne Eingriffe in die am Hydraulikmotor 20 eingreifende Antriebsmechanik eine Veränderung der Achsposition der vorderen Antriebsräder 4 vorgenommen werden, so daß das Fahrzeug einfach an unterschiedliche Einsatzbedingungen, beispielsweise unterschiedliche Rohrquerschnitte der Rohrleitung, angepaßt werden kann.

Innerhalb der Gehäuseschale 64 ist außerdem ein Elektromotor 24 angeordnet, der über ein an seiner Antriebswelle 26 angeordnetes Ritzel 28 in den Zahnkranz 30 einer zur Längsrichtung parallelen Hohlwelle 32 eingreift.

Zum Fixieren des Fahrzeuges 6 in der Rohrleitung mit dem Spannkolben 18 ist ein pneumatischer Spannzylinder 182 vorgesehen, der über ein 3/2-Wegeventil an eine Leitung 164, 164a für Druckluft angeschlossen ist.

Als Antriebseinrichtungen für die Radialzustellung des in der Figur nicht sichtbaren Fräskopfes sowie den innerhalb des Fräskopfes angeordneten Fräsmotor zum Antrieb des Fräswerkzeuges sind ebenfalls hydraulische Antriebsaggregate vorgesehen. Diese werden ebenso wie der Hydraulikmotor 20 über elektrisch steuerbare hydraulische Proportionalventile 504, 502 bzw. 202 mit Hydrauliköl versorgt. Das Fahrzeug 6 ist hierzu an seiner vom Bearbeitungskopf abgewandten Stirnseite an eine zu einem Vorratstank führende Hydraulikleitung 162 sowie an eine zu einer Ölpumpe führende Hydraulikleitung 163 angeschlossen. Diese Hydraulikleitungen werden in Form von innerhalb der Gehäuseschale 64 als Bohrungen verlaufenden Kanälen 162a, 163a jeweils zu den Proportionalventilen 202, 502 und 504 geführt. Vom Proportionalventil 202 ausgehend führen ebenfalls innerhalb der Gehäuseschale 64 verlaufende Kanäle 203, 204 unmittelbar zum Hydraulikmotor 20 für den Fahrantrieb. Von den Proportionalventilen 502 und 504 führen weitere Kanäle 168a, 169a bzw. 166a, 167a zu Nuten 68 einer die Hohlwelle 32 umgebenden Lagerschale 66. Diese Nuten 68 umgeben ringförmig die Hohlwelle 32, die in ihrem Wellenschaft Kanäle 166b bis 169b enthält, die im Bereich dieser Nuten 68 an die Außenmantelfläche der Welle 32 herangeführt sind. Anstelle der gemäß Figur 2 in der Lagerschale 66 angeordnete Nuten 68 können Nuten auch am Außenumfang der Hohlwelle 32 angeordnet sein.

Zur elektrischen Versorgung des Elektromotors 24 und der Ventile 184, 202, 502 und 504 sowie der in der Nähe der Bearbeitungsvorrichtung untergebrachten elektrischen Hilfseinrichtungen, wie beispielsweise Videokamera, Beleuchtung und Schwenkantrieb für die Videokamera, ist das Fahrzeug 6 an ein mehrpoliges elektrisches Kabel 165 angeschlossen, das zur besseren Übersichtlichkeit der Darstellung nur symbolisch als einpolige Leitung veranschaulicht ist. Innerhalb des Fahrzeugs 6 führen elektrische Leitungen 165a in das Innere der Hohlwelle 32 und von dort zu einem mehrpoligen Schleifringübertrager, von dem ebenfalls aus Gründen der Übersichtlichkeit nur sechs Pole dargestellt sind. Dieser Schleifringübertrager enthält entsprechend der Anzahl der erforderlichen Anschlüsse mehrere an einer drehfixiert mit der Hohlwelle 32 verbundenen Hohlwelle 34 angeordnete Schleifringe 38, die jeweils mit Kontakten elektrisch verbunden sind, die an der Außenoberfläche einer drehfest mit der Gehäuseschale 64 verbundenen Hülse 36 angeordnet sind.

In der Gehäuseschale 64 ist außerdem ein Kanal 161a für Wasser vorgesehen, der ebenfalls über eine am Außenumfang der Hohlwelle 32 befindliche Drehdurchführung an eine innerhalb des Schaftes der Hohlwelle 32 verlaufende Leitung 161b angeschlossen ist.

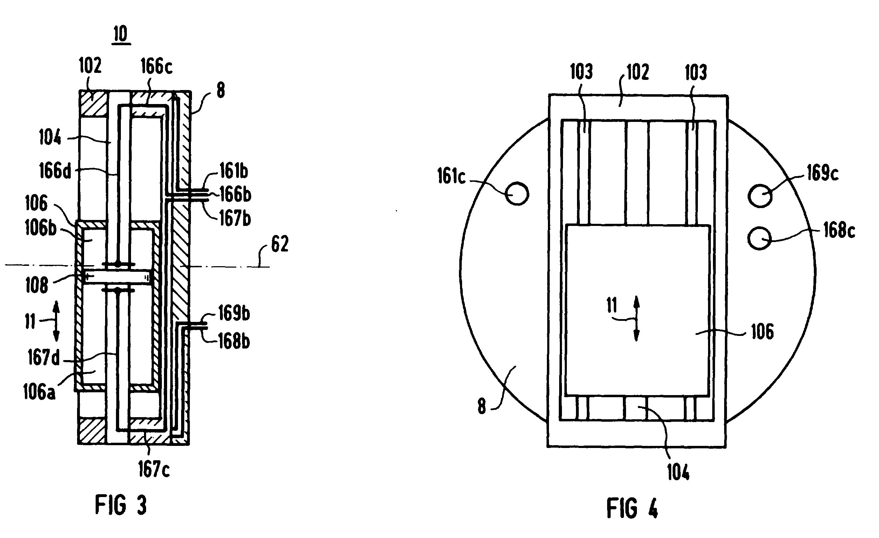

Gemäß **Figur 3** enthält die Halteeinrichtung 10 einen auf dem Drehteller 8 befestigten Halterahmen 102, in dem eine Kolbenstange 104 quer zur Drehachse 62 des Drehtellers 8 fixiert ist. Längs der Kolbenstange 104 ist ein Radialschlitten 106 in Richtung des Doppelpfeils 11 verschiebbar angeordnet. Die Kolbenstange 104 ist hierzu mit einem feststehenden Kolben 108 versehen, der vom Radialschlitten 106 in Form eines freischwimmenden oder freibeweglichen Zylinders umgeben wird. Dieser Kolben 108 teilt die vom Radialschlitten 106 gebildete und die Kolbenstange 104 umschließende Kammer in zwei Teilkammern 106a und 106b, die wechselseitig mit Druck beaufschlagt werden können und somit eine Längsbewegung des Radialschlittens 106 bewirken.

Die Zuführung der Hydraulikflüssigkeit für die Teilkammern 106a und 106b erfolgt durch innerhalb der Kolbenstange 104 verlaufende Kanäle 166d und 167d, die unmittelbar an innerhalb des Halterahmens 102 verlaufende Kanäle 166c bzw. 167c angeschlossen sind, die wiederum unmittelbar mit innerhalb des Drehtellers 8 verlaufenden Kanälen 166b bzw. 167b verbunden sind. Dadurch wird eine freie und störungsanfällige Leitungsführung vermieden.

Gemäß **Figur 4** hat der Halterahmen 102 eine rechteckige Gestalt und ist mit Führungsstangen 103 versehen, die als zusätzliche Führung für den Radialschlitten 106 dienen.

Am Drehteller 8 sind Anschlüsse 161c für Wasser sowie 168c und 169c für die zum Fräsmotor führenden Hydraulikleitungen angeordnet. Aus Gründen der Übersichtlichkeit sind die elektrischen Anschlüsse für die zur Fernsehkamera und die hierzu erforderlichen Beleuchtungs- und Antriebseinrichtungen führenden elektrischen Leitungen nicht dargestellt.

## Patentansprüche

1. Vorrichtung zum Bearbeiten der Innenoberfläche einer nichtbegehbaren Rohrleitung (40), bei der ein in der Rohrleitung (40) fahrbares Fahrzeug (6) eine drehbar gelagerte Welle (32) enthält, an der wenigstens mittelbar eine Bearbeitungseinrichtung (12) angeordnet ist, wobei zur Übertragung der zur Versorgung der Bearbeitungseinrichtung (12) erforderlichen Betriebsmedien in einer Gehäuseschale (64) des Fahrzeugs (6) angeordnete Kanäle (161a, 166a bis 169a) vorgesehen sind, **dadurch gekennzeichnet**, daß die Kanäle (161a, 166a bis 169a) über Drehdurchführungen (68) an drehfest mit der Bearbeitungseinrichtung (12) verbundene Leitungen (161b, 166b bis 169b) angeschlossen sind.

2. Vorrichtung nach Anspruch 1, **dadurch gekennzeichnet**, daß die drehfest mit der Bearbeitungseinrichtung (12) verbundenen Leitungen (161b, 166b bis 169b) jeweils auf einem Teilabschnitt innerhalb des Schaftes der Welle (32) verlaufen.

3. Vorrichtung nach Anspruch 2, **dadurch gekennzeichnet**, daß die Drehdurchführungen (68) am Außenmantel der Welle (34) oder an einem die Welle (34) umgebenden Lagergehäuse (66) Nuten (68) umfassen, die die Welle (34) ringförmig umgeben, und in die die drehfest in der Welle (34) angeordneten Leitungsabschnitte (161b, 166b bis 169b) und die in der Gehäuseschale (64) des Fahrzeugs (6) angeordneten Kanäle (161a, 166a bis 169a) münden.

4. Vorrichtung nach einem der vorhergehenden Ansprüche, **dadurch gekennzeichnet**, daß zur Übertragung elektrischer Signale an der Welle (32) oder an einem die Oberfläche der Welle (32) anschließenden drehfest mit dem Lagergehäuse (66) verbundenen Gehäuseteil (36) angeordnete Schleifringe (38) vorgesehen sind.

5. Vorrichtung nach Anspruch 4, **dadurch gekennzeichnet**, daß eine hohle Welle (32) vorgesehen ist, wobei die Schleifringe (38) wenigstens mittelbar am Innenmantel der Welle (32) oder an einer im Innern der Welle angeordneten, drehfest mit der Gehäuseschale (64) verbundenen Hülse (36) angeordnet sind.

## Claims

1. Arrangement for the treatment of the inner surface of an inaccessible pipeline (40) in which a vehicle (6), which can be moved in the pipeline (40), contains a rotatably mounted shaft (32) on which at least indirectly there is arranged a treatment device (12), with channels (161a, 166a to 169a), which are arranged in a housing shell (64) of the vehicle (6), being provided for the transfer of the operating media required to supply the treatment device (12), characterised in that the channels (161a, 166a to 169a) are connected by way of rotary leadthrough portions (68) to lines (161b, 166b to 169b) which are connected to the treatment device (12) in a fixed manner with respect to rotation.

2. Arrangement according to claim 1,
characterised in that the lines (161b, 166b to 169b), which are connected to the treatment device (12) in a fixed manner with respect to rotation, each extend along a partial section within the shank of the shaft (32).

3. Arrangement according to claim 2,
characterised in that the rotary leadthrough portions (68) comprise, on the outer casing of the shaft (34) or on a bearing housing (66) which surrounds the shaft (34), grooves (68) which annularly surround the shaft (34) and into which the line sections (161b, 166b to 169b), which are arranged in the shaft (34) in a fixed manner with respect to rotation, and the channels (161a, 166a to 169a), which are arranged in the housing shell (64) of the vehicle (6), lead.

4. Arrangement according to one of the preceding claims, characterised in that for the purpose of transmitting electrical signals slip rings (38) are provided that are arranged on the shaft (32) or on a portion (36) of the housing that connects the surface of the shaft (32) and is connected to the bearing housing (66) in a fixed manner with respect to rotation.

5. Arrangement according to claim 4,
characterised in that a hollow shaft (32) is provided, in which case the slip rings (38) are arranged at least indirectly on the inner casing of the shaft (32) or on a sleeve (36) which is arranged in the interior of the shaft and which is connected to the housing shell (64) in a fixed manner with respect to rotation.

## Revendications

1. Dispositif de traitement de la surface intérieure d'une canalisation (40) dans laquelle on ne peut pas passer, dispositif dans lequel un véhicule (6) mobile dans la canalisation (40) présente un arbre (32) qui est monté tournant et sur lequel un dispositif (12) de traitement est monté au moins indirectement, des canaux (161a, 166a à 169a) disposés dans une coque (64) formant carcasse du véhicule (6) étant prévus pour transporter les fluides nécessaires à l'alimentation du dispositif (12) de traitement, **caractérisé** en ce que les canaux (161a, 166a à 169a) sont raccordés par l'intermédiaire de passages (68) tournants à des conduites (161b, 166b à 169b) solidaires en rotation du dispositif (12) de traitement.

2. Dispositif selon la revendication 1, **caractérisé** en ce que les conduites (161b, 166b à 169b) solidaires en rotation du dispositif (12) de traitement s'étendent chacune sur un tronçon partiel à l'intérieur du corps de l'arbre (32).

3. Dispositif selon la revendication 2, **caractérisé** en ce que les passages (68) tournants entourent, sur la surface latérale extérieure de l'arbre (34) ou sur un boîtier (66) de montage entourant l'arbre (34), des encoches (68) qui entourent en forme d'anneau l'arbre (34) et dans lesquelles débouchent les tronçons de conduites (161b, 166b à 169b) disposées solidaires en rotation dans l'arbre (34) et les canaux (161a, 166a à 169a) disposés dans la coque (64) formant carcasse du véhicule (6).

4. Dispositif selon l'une des revendications précédentes, **caractérisé** en ce que des bagues (38) glissantes disposées sur l'arbre (32) ou sur une partie de boîtier (36) se raccordant à la surface de l'arbre (32) et solidaire en rotation du boîtier (66) de montage sont prévues pour la transmission de signaux électriques.

5. Dispositif selon la revendication 4, **caractérisé** en ce qu'il est prévu un arbre (32) creux, les bagues (38) glissantes étant disposées au moins indirectement sur la surface latérale intérieure de l'arbre (32) ou sur un manchon (36) disposé à l'intérieur de l'arbre et solidaire en rotation de la coque (64) formant carcasse.
